# EUROPEAN PATENT SPECIFICATION

(11) **EP 3 136 109 B1**
(45) Date of publication and mention of the grant of the patent: **02.01.2019**
(21) Application number: 15182958.7
(22) Date of filing: 28.08.2015
(51) Int. Cl.: G01N 35/04, B01L 9/06, B01L 9/00

(54) **INSERT FOR VESSEL HOLDER FOR AN AUTOMATED ANALYSIS SYSTEM**
EINSATZ FÜR BEHÄLTERHALTERUNG FÜR EIN AUTOMATISIERTES ANALYSESYSTEM
INSERT POUR SUPPORT DE CUVE POUR UN SYSTÈME D'ANALYSE AUTOMATISÉ

(43) Date of publication of application: 01.03.2017
(73) Proprietor: F. Hoffmann-La Roche AG, 4070 Basel (CH); Roche Diagnostics GmbH, 68305 Mannheim (DE)
(72) Inventor: SCHACHER, Gottlieb, 6010 Kriens (CH); MEYER, Thomas, 6318 Walchwil (CH); METZGER, Dr. Jean-Claude, 8142 Uitikon (CH); TROXLER, Markus, 6343 Rotkreuz (CH)
(74) Representative: Peterreins Schley

(56) References cited:
- EP-A1- 2 327 989
- US-A- 5 885 529
- US-A1- 2002 108 917
- US-A1- 2006 266 719
- US-A1- 2015 101 911

## Description

### Technical Field

This disclosure relates to inserts for a vessel holder of an automated analysis system, racks including inserts and automated analysis systems.

### Background

In automated analysis systems for vessels (e.g., closed tubes containing bodily fluids or other bodily specimen) vessels can be manipulated, e.g., by removing from or inserting into the vessel fluids or other specimen. In one example, a needle or pipette can be introduced into the vessel in the automated analysis system. Handling these vessels in an automated analysis systems might require that the vessels be positioned in relatively precise manner. If the vessels are not positioned with sufficient precision a manipulator of an automated analysis system might not reliably operate on the vessels. Securing a precise positioning of the vessels can be challenging, in particular as the vessels to be used with automated analysis systems can have a large variety of sizes and shapes.

US 2006/266719 A1 discloses a sample tube holder having sample tube compartments with sets of spaced finger springs provided therein for maintaining sample tubes in substantially upright orientations. A guide structure having a series of openings is used to direct sample tubes into the sample tube compartments and to restrict lateral movement of sample tubes held thereby. A retainer is releasably engaged by the guide structure and has openings sized to provide access to sample tubes held by the sample tube compartments but which restrict vertical movement of the sample tubes. Tabs at a base of the sample tube holder and hold-downs fixed to a stationary structure adjacent a conveyor cooperate to restrict vertical movement of the sample tube holder during automated sampling procedures.

### Summary

The present invention relates to a rack including multiple vessel holders, each vessel holder including an insert for a vessel of an automated analysis system. Other embodiments are described in the dependent claims. The rack of the present invention can have one or more advantageous effects.

First, the insert for a vessel holder can align (e.g., center) a comparatively large variety of vessels having different vessel diameters.

Second, the insert for a vessel holder can align a central axis of the vessel by providing a two-level (or more) alignment along an axial extension (i.e., height) of the vessel by the first and second gripping elements. In this manner, the insert for a vessel holder can secure that the vessel has an upright position in the vessel holder. In inserts which merely grip a vessel at one height a vessel might be held in a skewed orientation even though the vessel is supposedly centered in a single plane.

Third, the insert for a vessel holder can properly align particular non-cylindrical vessels as well (e.g., conical vessels). As the first and second gripping elements can engage with the vessel at two or more axial positions (i.e., heights) of the vessel relatively independently, the lower gripping element can engage with the, e.g., conical vessel at a position closer to a central axis of the vessel than the upper gripping element thereby centering the conical vessel. Fourth, the insert for a vessel holder can have comparatively simple configuration (e.g., with a reduced number of elements, a reduced amount of material and/or a reduced complexity of elements) and thus can be comparatively cost efficient. For example, all gripping elements of the vessel holder can be attached to a single central portion which can provide for a large distance between the gripping heights of the gripping elements while at the same time avoiding long and potentially complex and material-expensive gripping elements. In some examples, this simplicity allows for fabricating the insert as one single part.

Fifth, having the gripping elements attached to a central portion can provide for a relatively large distance between the gripping heights while at the same time having relatively equal lengths of the gripping arms. In this manner, the gripping properties of all gripping elements can be relatively equal which can improve centering and make insertion of a vessel easier (compared to vessel holders which have a set of gripping elements with relatively unequal lengths).

In addition, by attaching the gripping to a central portion relatively long and relatively short gripping elements can be avoided. This can be beneficial to provide a larger radial flexibility (to grip a larger range of vessels with differing diameters and/or to improve the grip of the gripping elements).

Some examples of insert for a vessel holder, which are not part of the present invention, can be fabricated as an integral part of a rack including multiple vessel holders. This can reduce fabrication costs. For instance, the insert for a vessel holder can consist of only the gripping elements and the central portion they are attached to.

Several terms are used in a particular meaning in the present disclosure, as will be explained subsequently.

The term "vessel" is used in the present disclosure to identify a container comprising a body and an inner space adapted to receive liquids or solids, e.g. to enable a reaction between one or more samples and one or more reagents and/or to enable analysis of a test liquid contained therein. For example, a vessel can be a test tube or a cuvette. A closed vessel is a vessel whose inner space is sealed to the exterior. For example, a closed vessel's inner space can be sealed by a cap (e.g., a cap attached to an opening of a test tube).

For conciseness' sake the present disclosure uses a particular reference system when describing directions and locations in connection with the inserts. This reference system will be explained subsequently.

In the present disclosure, an "axial direction" refers to a direction of a vessel extending between an opening of the vessel and an opposite (usually closed) end of a vessel. However, some vessels might have openings at both ends along an axial direction.

The expression "height" is also used as indicating a position along the axial direction of the vessel. Unless indicated otherwise, the height is measured from the (usually closed) end of a vessel to an opposite end of a vessel including an opening of the vessel. Accordingly, "the" height of a vessel refers to the vessel's complete extension along the axial direction.

For example, the height of a test tube refers to the test tube's extension measured from the opening at one end of the test tube to a rounded U-shaped or plane bottom opposite of the opening. Likewise, the height of a bottle refers to the extension of the bottle extending from a foot on which the bottle can stand up to an opening of the bottle at its opposite end. This is also the case for pot-shaped vessels.

As in the above referenced examples, the axial extension or height can also be determined based on a usual orientation in which the vessel is arranged. For instance, different vessels can typically be stored or arranged in a particular orientation. For instance, test tubes are usually arranged in a rack so that the opening of the test tube is arranged at an upmost position. In the same manner, bottles or pots are usually have a particular surface so that they can be put onto a support (e.g., a table). In these examples, a height or an axial extension refers to a vertical extension of the vessel stored or arranged in the particular orientation. Accordingly, a "radial direction" extends orthogonally to the axial direction. Unless defined otherwise, the radial direction extends from a center of the vessel radially to the outer surface of the vessel. Accordingly, a heading of the radial direction with the depending on a position on a plane perpendicular to the axial direction. The expression "width" is also used as indicating an axial extension of a vessel.

Moreover, a "circumferential direction" extends in a plane orthogonal to the axial direction (as does the axial direction). In addition, the circumferential direction extends orthogonally to the radial directions. For example, an outside wall of a cylindrical vessel can extend in a circumferential direction. The expression "circumference" is also used as indicating a circumferential extension of a vessel.

In other words, the "axial direction," the "radial direction" and the "circumferential directions" form a cylindrical coordinate system relative to a vessel.

In the preceding passages, different directions and extensions have been defined in the relative coordinate system of a vessel. In the present disclosure, these directions and extensions are also used to specify positions of extensions of vessel holders and inserts of vessel holders. Unless explicitly stated otherwise, the coordinate system of a vessel holder is specified by the coordinate system of a vessel (as defined above) when the vessel has been inserted in the vessel holder. Usually, vessel holders only allow for one orientation in which the vessel can be inserted in the insert / vessel holder. However, in some examples, a vessel holder might allow a vessel to be inserted from opposite sides. In this example, there is one degree of freedom when defining the directions as explained above.

The "central portion" as recited in the present disclosure is defined independently of the above specified directions. The central portion is arranged between the at least one first gripping element and the at least one second gripping element. Therefore, a location of the central portion is defined relative to these gripping elements and not absolutely in a particular coordinate system. In addition, the "central portion" not necessarily splits the insert for a vessel holder in two equal halves. In other words, the central portion does not have to be arranged in the middle along a predetermined extension of the insert for a vessel holder. Rather, a part of the insert for a vessel holder extending at one side of the central portion can be (substantially) longer than a part of the insert for a vessel holder extending on the opposite side of the insert for a vessel holder.

The expression "elastic" includes any (substantially) reversible deformation and compression. For example, a spring can elastically deform. As a consequence, the first and second gripping elements can include spring portions. However, the gripping elements of the present disclosure are not limited to gripping elements including spring portions. In other examples, a portion of a gripping element can be configured and arranged to elastically compress to grip a vessel. For instance, the compressible portion can include a spongeous material. Thus, the first and second gripping elements can include spongeous material configured to elastically engage with a vessel.

### Description of the Drawings

FIG. 1 illustrates an insert for a vessel holder of an automated analysis system according to the present disclosure.
FIG. 2 shows a cutaway view of the insert for a vessel holder of an automated analysis system of FIG. 1.
FIG. 3 illustrates a second example of an insert for a vessel holder of an automated analysis system according to the present disclosure.
FIG. 4 illustrates a side view of the insert for a vessel holder of an automated analysis system of FIG. 3.
FIG. 5 illustrates a top view of the insert for a vessel holder of an automated analysis system of FIG. 3.
FIG. 6 illustrates several characteristic dimensions of the insert for a vessel holder of an automated analysis system of FIG. 3.
FIG. 7 illustrates a third example of an insert for a vessel holder of an automated analysis system according to the present disclosure.
FIG. 8 illustrates a fourth example of an insert for a vessel holder of an automated analysis system according to the present disclosure.
FIG. 9 illustrates a fifth example of an insert for a vessel holder of an automated analysis system according to the present disclosure.
FIG. 10 illustrates a sixth example of an insert for a vessel holder of an automated analysis system according to the present disclosure.
FIG. 11 illustrates an example of inserts for a vessel holder of an automated analysis system inserted in a rack which is not part of the present invention.
FIG. 12 illustrates a cut-away of the rack of FIG. 11.
FIG. 13 illustrates a cross-sectional view of the rack of FIG. 11.
FIG. 14 illustrates another example of a rack according to the present disclosure.
FIG. 15 illustrates a view of the rack of FIG. 14 in an assembled state.
**FIG. 16a** illustrates another example of a rack according to the present disclosure.
**FIG. 16b** illustrates a cutaway view of the rack of **FIG. 16a****.**
**FIG. 17** illustrates view of the rack of **FIG. 16a** during assembly.
**FIG. 18a** illustrates a view of the rack of **FIG. 16a** in an assembled state.
**FIG. 18b** illustrates a cutaway view of the rack of **FIG. 18a****.**

### Detailed Description

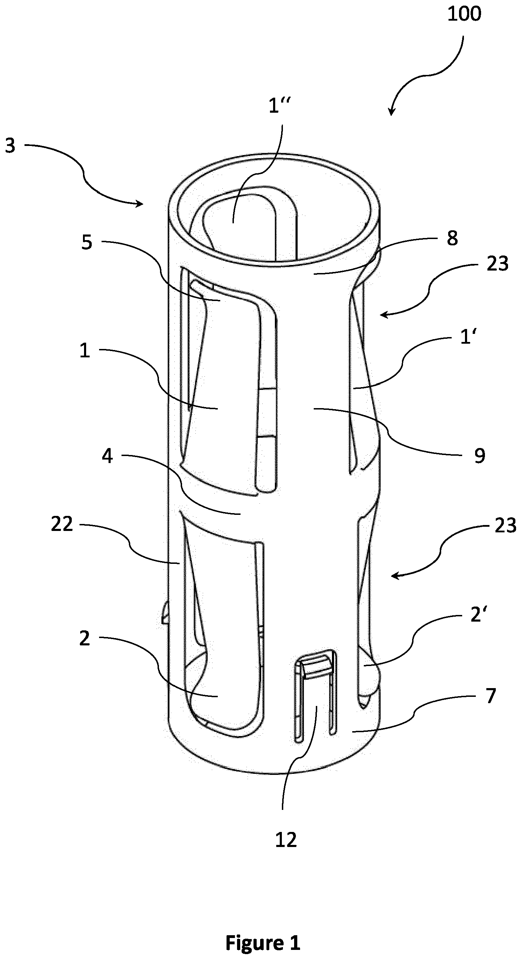

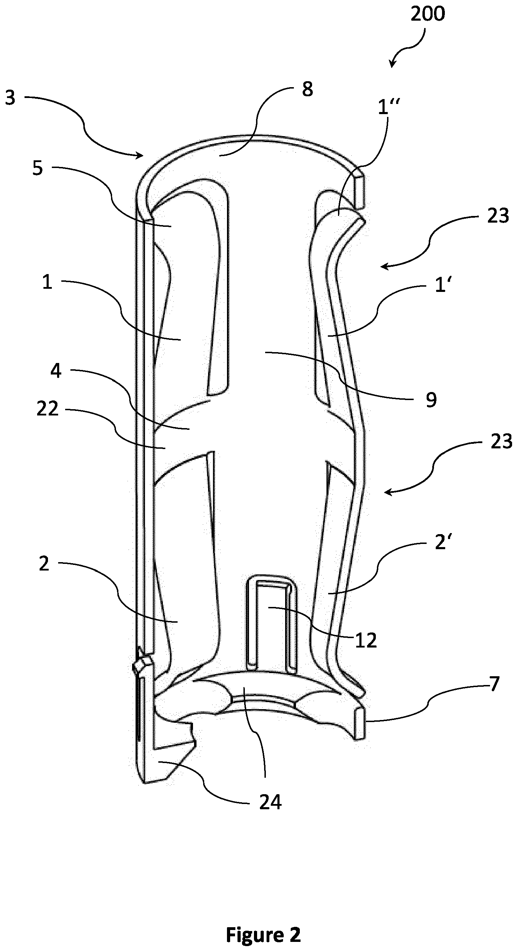

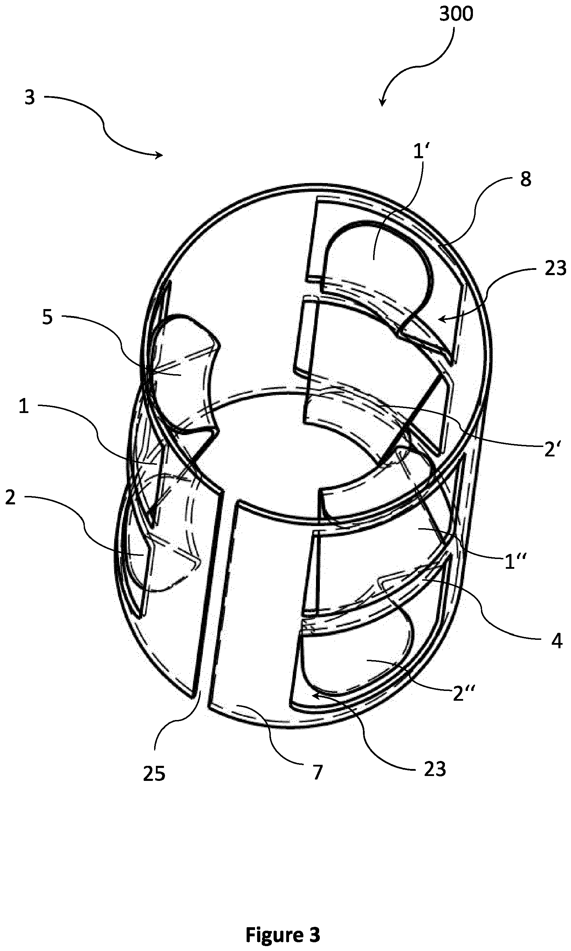

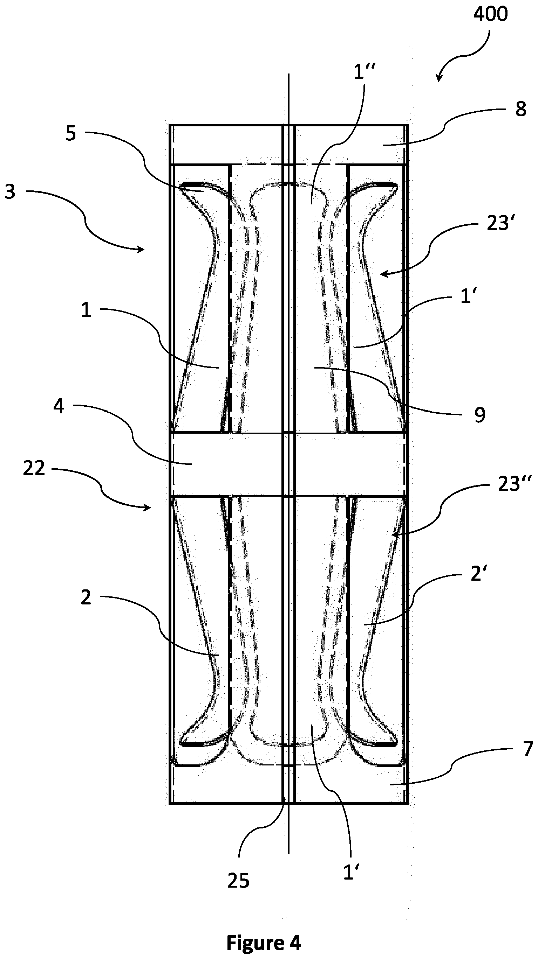

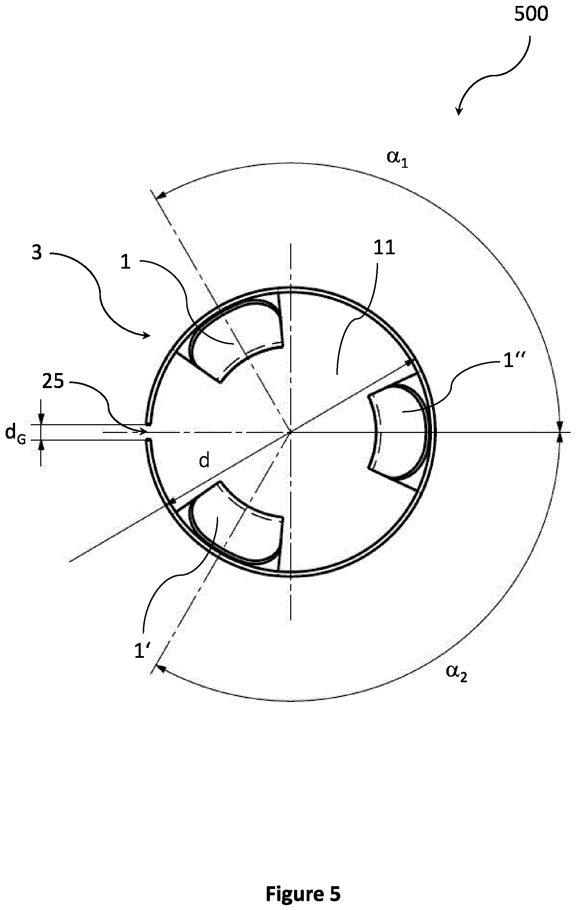

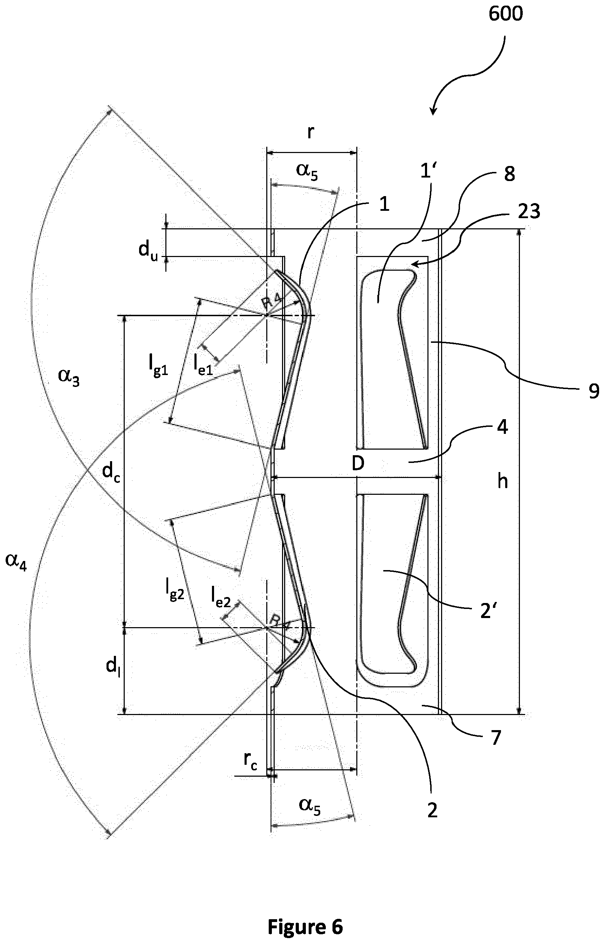

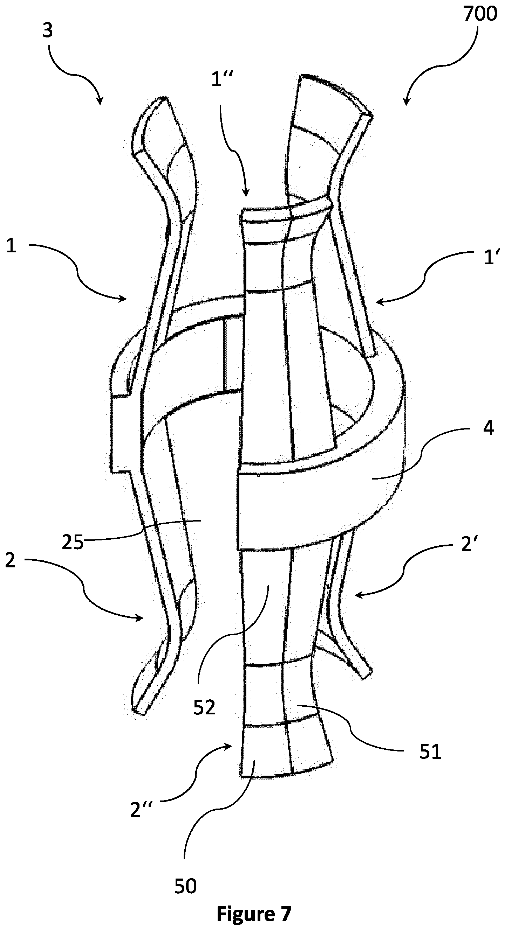

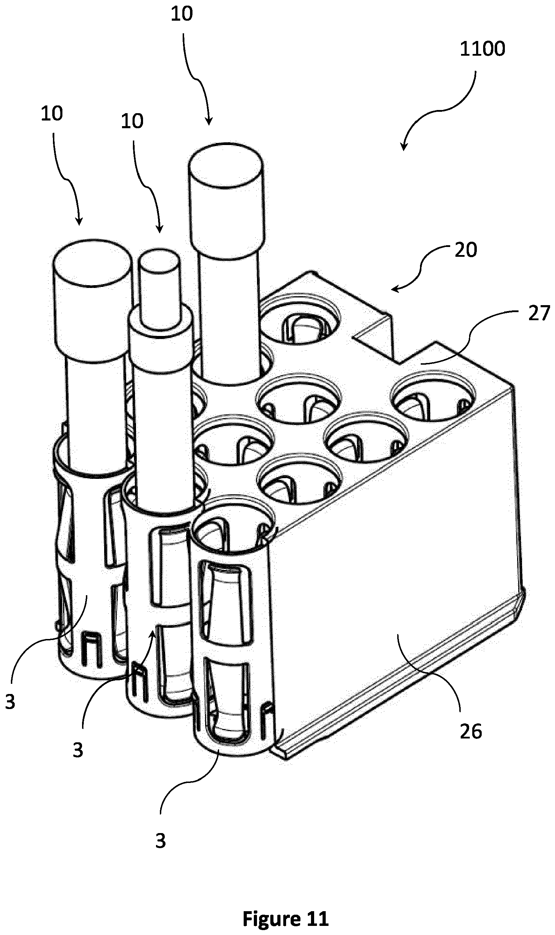

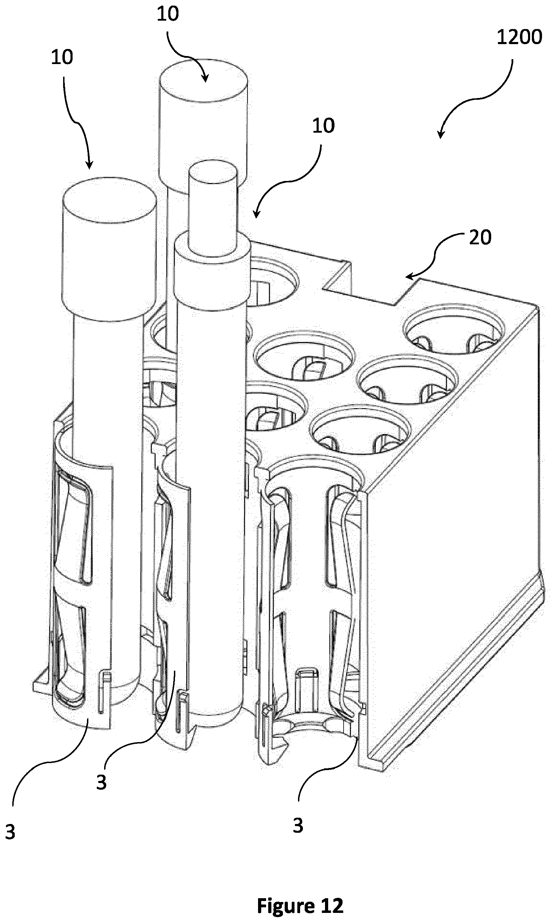

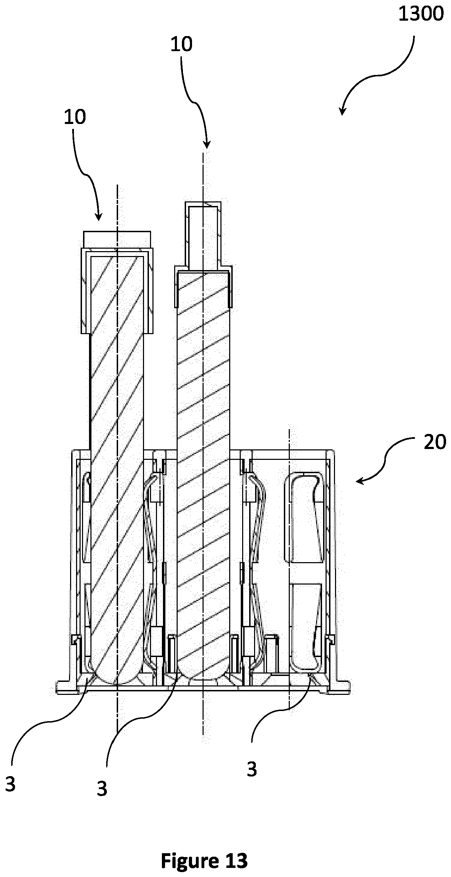

Different aspects of the inserts for a vessel holder of an automated analysis system, racks including inserts and automated analysis system according to the present disclosure will be discussed subsequently. First, in connection with **FIGS. 1** **and** **2** the general parts of an example insert for a vessel holder will be discussed. Subsequently, in connection with **FIGS. 3** **and** **4****,** and alternative example of an insert for a vessel holder and different additional elements of the inserts for a vessel holder of the present disclosure will be treated in more detail. Then, in connection with **FIGS. 5** **and** **6** aspects of the size and geometry of example inserts for a vessel holder of the present disclosure will be explained in more detail. In connection with **FIG. 7** to **FIG. 10****,** different alternative configurations of inserts for a vessel holder will be detailed. Last, in connection with **FIG. 11** to **FIG. 18b** racks for receiving the inserts for a vessel holder of the present disclosure will be discussed in detail.

**FIG. 1** illustrates an insert for a vessel holder of an automated analysis system according to the present disclosure. The insert 3 includes at least one first gripping element 1, 1', 1" configured to elastically engage with a vessel 10 at a first position of the vessel 10 when the vessel is being inserted into the vessel holder, at least one second gripping element 2, 2', 2" configured to elastically engage with a vessel 10 at a second position of the vessel 10 when the vessel is being inserted into the vessel holder and a central portion 4 arranged between the first and second gripping elements 1, 1', 1", 2, 2', 2", the at least one first gripping element 1, 1', 1" and at the least one second gripping 2, 2', 2" element being attached to the central portion 4.

The gripping elements 1, 1', 1", 2, 2', 2" and the central portion 4 will be subsequently discussed in more detail.

In the example of **FIG. 1****,** the insert has a first group of three gripping elements 1, 1', 1" and a second group of three gripping elements 2, 2', 2". However, a number of groups of gripping elements and a number of gripping elements can be freely chosen. For example, the insert can have a first group of two gripping elements 1, 1', 1" and a second group of two gripping elements 2, 2', 2". In other examples, an alternative insert has a first group of four gripping elements 1, 1', 1" and a second group of four gripping elements 2, 2', 2". In still other examples, an alternative insert has a first group of more than four gripping elements 1, 1', 1" and a second group of more than four gripping elements 2, 2', 2". Additionally, the first and second groups of gripping elements can consist of a different number of gripping elements (e.g., four in the first group and three in the second group).

Additionally or alternatively, the insert can include three or more groups of gripping elements extending at different heights of the insert. In one example, an insert includes two central portions and four groups of gripping elements. A first central portion of the two central portions can be arranged between first and second groups of gripping elements. Likewise, a second central portion of the two central portions can be arranged between third and fourth groups of gripping elements. In still other examples, the insert includes more than two central portions and more than four groups of gripping elements attached to the central portions.

In the example of **FIG 1****,** the first group of gripping elements 1, 1', 1" extends from respective attachment points at the central portion 4 in the axial direction. The second group of gripping elements extends from respective attachment points at the central portion 4 in the axial direction substantially in the opposite direction. Each gripping element has a free end 5. However, in other examples the gripping elements can be coupled at both ends to a body 22 of the insert 3 (in the example of **FIG. 1****,** the central portion 4 is a part of the body 22).

The gripping elements 1, 1', 1", 2, 2', 2" include a bow-shaped section curving away from a vessel to be engaged and configured to engage with a vessel at a point located on the respective bow-shaped section. This example geometry of the gripping elements and alternative geometries will be discussed in more detail below in connection with **FIG. 4** to **FIG. 6****.**

In the example of **FIG. 1** the central portion 4 consists of an annular element extending about 360° in a circumferential direction (i.e., completely around a circumference of the insert). As will be discussed in more detail below, the annular element can extend only partly about a circumference of the insert in other examples. In addition or alternatively, the central portion 4 can include a differently shaped element. For instance, the central portion can include a rectangular element (e.g. a square element). In other examples, the central portion can include a polygonal element (e.g., a hexagonal or octagonal element). Moreover, the central portion 4 can include multiple elements (e.g., a second element in addition to an annular element in the example of **FIG. 1**).

As shown in **FIG. 1****,** the central portion 4 can be part of a body 22 of the insert 3. In other examples, the central portion 4 is not connected to any other elements besides the gripping elements. Apart from the central portion 4, the body 22 can include an upper portion 8 including an annular element and a lower portion 7 including an annular element. The upper portion 8 is arranged spaced apart axially from the central portion 4. The lower portion 7 is also spaced apart axially from the central portion 4, but in the opposite direction compared to the upper portion. In one example (as shown in **FIG. 1**), the upper and the lower portions 7, 8 form respective axial ends of the insert. As discussed above in connection with the central portion 4, the upper and lower portions 7, 8 can be shaped differently than shown in **FIG. 1****,** the upper and the lower portions 7, 8 both being coupled to the central portion 4 by three axial struts 9.

In alternative examples, the upper and the lower portions can be coupled to the central portion by a larger or smaller number of axial struts. For instance, the lower portions can be coupled to the central portion by one axial strut. Moreover, a shape and geometry of the axial struts can be chosen differently from the shape and geometry depicted in **FIG. 1****.** The struts 9 in **FIG. 1** extend about 30° to 60° of a circumference of the body 3 of the insert 3. In other examples, the struts extend about a smaller portion of the circumference (e.g., between 5° and 30°) or a larger portion (e.g., between 65° and 115°). In addition or alternatively, a shape, number and/or geometry of struts coupling the lower portion to the central portion can differ from the shape, number and/or geometry of struts coupling the upper portion to the central portion. In the example of **FIG. 1****,** the struts coupling the lower portion 7 to the central portion 4 are thicker (i.e., extend along a larger portion of the circumference of the insert 3) than the struts coupling the lower portion 7 to the central portion 4.

A number and geometry of the struts can be varied to tailor the mechanical properties of the insert. For instance, the insert can be more stable and/or stiffer when the struts are more numerous and thicker. On the other hand, the insert can be lighter and more material-efficient if the struts are thinner and/or less numerous.

Additionally or alternatively, the upper and the lower portions can be coupled to the central portion by the gripping elements (which have no free ends in this example). In one example, the upper and lower portions can be coupled to the central portion only by the gripping elements.

As depicted in **FIG. 1****,** the body 22 of the insert 3 has a substantially cylindrical outer shape. This substantially cylindrical outer shape is formed by the central portion 4, the upper and the lower portions 7, 8 and the axial struts 9. These elements form multiple windows 23 in which the gripping elements 1, 1', 1", 2, 2', 2" are disposed. The body 22 and the gripping elements 1, 1', 1", 2, 2', 2" can be formed integrally (in some examples, the complete insert 3 can be formed integrally). For example, the insert 3 can be formed of a plastic material. In other examples, the insert 3 (or at least the gripping elements 1, 1', 1", 2, 2', 2") can be formed of a metal or metal alloy (e.g., a spring steel). In still other examples, the insert 3 can be formed a composite material (e.g., a composite material including or consisting of a plastic material and a metal).

In some examples, the insert 3 can be formed by an injection-molding process (e.g., by a single injection-molding process in one piece). This fabrication method can also be used to fabricate the other inserts discussed in the present disclosure.

These features contribute to providing an insert that can be manufactured in a simple and therefore cost efficient manner. In particular, some prior art inserters have a more complex shape compared to the inserts of the present disclosure. In addition, some prior art inserters consist of multiple parts. These inserts can be more difficult to fabricate than some of the inserts of the present disclosure.

Even though the integral form and the fabrication techniques have been discussed above in connection with **FIG. 1****,** other inserts discussed in the present disclosure can also be integral (i.e., consist of one piece) and/or can be fabricated by injection-molding techniques.

In the example of **FIG. 1** an insert having three windows 23 formed with the body 22 is depicted. In other examples, the number of windows can be different. For instance, a number of windows can correspond to the number of gripping elements of the insert (which can be different than six, as explained above). In other examples, two or more gripping elements can be arranged in a single window of the body (e.g., all three first and second gripping elements 1, 1', 1", 2, 2', 2" in the example of **FIG. 1** can be arranged in a single window, respectively, in another example).

In addition or alternatively, the windows can be arranged in more than two rows along an axial extension of the insert (e.g., in three rows or in four rows along an axial extension of the insert).

Moreover, the body 22 of the insert 3 can include additional optional elements.

For example, the body can form one or more locking elements configured to engage with a corresponding element of a rack when the insert is inserted into the rack. As depicted in **FIG. 1****,** the locking elements can be clips 12 having a free end configured to latch into a corresponding recess to secure the insert in a rack. The clips 12 extend in a (slightly curved) plane defined by the axial struts 9.

However, in other examples the locking elements can include different elements (e.g., one or more protrusions configured to engage with a corresponding recesses disposed at the rack, or vice versa).

In addition or alternatively, the clips 12 (or any other locking element) can be arranged at different locations along the outer or inner surface of a body of an insert. For example, the clips 12 (or any other locking element) can be arranged at the upper or lower portions 7, 8 or the central portion 4 in other examples. Moreover, a number of clips 12 can be different than the number of clips in the insert 3 of **FIG. 1****.**

In one example, the clips 12 (or any other locking element) are formed integrally with other elements of the body 22. In particular, all parts of the body 22 and optionally the gripping elements can be formed integrally.

In the preceding sections, different aspects of inserts of the present disclosure have been discussed in connection with **FIG. 1****.** **FIG. 2** shows a cut-away view of the insert for a vessel holder of an automated analysis system of **FIG. 1****.** Several additional features of an insert will subsequently discussed in connection with **FIG. 2****.**

A first optional feature depicted in **FIG. 2** is that the insert comprises one or more stops 24 arranged in a bottom region of the insert configured to limit an axial movement of a vessel inserted into the vessel holder. In the example of **FIG. 2****,** three stops 24 are arranged at an inner surface of the body 22 in the area of the lower portion 7. As can be seen in **FIG. 2****,** each stop 24 is formed by a protrusion extending from the inner surface of the body 22 in the area of the lower portion 7. The stops 24 are arranged and sized so that a vessel inserted into the insert abuts the stops so that further axial movement (e.g., in a downward direction in **FIG. 1**) is prevented. Moreover, the inner edges of the stops 24 can jointly form at least a portion of a circle. In the example of **FIG. 1****,** each stop 24 has a curved upper inner edge and the curved inner edges of all stops 24 define a circle. This arrangement can contribute to centering the vessel in the insert as a vessel's rounded bottom might by centered by this arrangement. In other examples, each stop includes a curved upper surface and curved upper surfaces of all stops jointly defined a concave surface.

In other examples, the inserts of the present disclosure do not have dedicated stops to limit an axial movement of a vessel inserted into the vessel holder. For instance, a surface of a rack into which the insert is inserted or integrated can limit an axial movement of a vessel inserted into the vessel holder.

As can be seen in **FIG. 2****,** each gripping element 1, 1', 1", 2, 2', 2" includes a first section extending towards a vessel to be gripped and a second section extending away from the vessel to be gripped. As a result, each gripping element extends (in a relaxed state) over a predetermined axial distance into an inner space defined by the body 22 of the insert 3. When a vessel is introduced into the insert 3, the gripping elements 1, 1', 1", 2, 2', 2"come into contact with the vessel wall an flex outwardly (i.e., in a radial direction). The gripping elements 1, 1', 1", 2, 2', 2" are elastic, i.e., the gripping elements 1, 1', 1", 2, 2', 2" tend to reassume their relaxed configuration when a flexing force is removed. As a consequence, a vessel introduced into the insert is gripped by the gripping elements.

The predetermined axial distance determines a range of vessel diameters that can be gripped by an insert. If the vessel has a diameter smaller than a diameter of a circle inscribed into portions of the gripping elements at each height extending the farthest towards a central axial axis of the insert, it will not flex the gripping elements. On the other hand, a vessel whose diameter is larger than an inner diameter of the central portion cannot be gripped by the gripping elements. In the example of **FIG. 2****,** the gripping elements 1, 1', 1", 2, 2', 2" extend over a comparatively small distance into the inner volume of the insert 3. However, this distance can be different (e.g., larger) in other examples. For instance, each gripping element can extend over more than 20% (or even more than 50%) of a radius of an inner volume of the insert. In this manner, a large variety of vessels can be gripped by the insert.

In some examples, the joint effect of the gripping elements can center a vessel in the holder (in the present disclosure, "centering" refers to an alignment of a central axial axis of a vessel with a central axial axis of the insert). In order to achieve a centering of the vessel, an insert having three gripping elements at each height (i.e., the points of contact of three gripping elements are located on a pane perpendicular to the axial direction of the insert) can be advantageous. In some examples, the gripping elements are arranged 120° spaced apart about a circumference of the insert.

The inserts of the present disclosure grip a vessel at at least two heights. In the example of **FIG. 2****,** the first gripping elements 1, 1', 1" are arranged to grip a vessel at a first height and the second gripping elements 2, 2', 2" are arranged to grip the vessel at a second height. In other words, positions at which the first and second gripping elements engage with a vessel are spaced apart in an axial direction.

This engagement at two different heights can improve the alignment of a vessel in the insert. In some prior art inserts a vessel is only gripped at one height. In this case, a vessel might be held in the insert with a vessel's axial axis skewed compared to the insert's axial axis. This can be problematic in an automated analysis system as, e.g., an opening of the vessel might be considerably displaced compared to a teaching point of a manipulator.

In the example of **FIG. 2****,** the gripping elements 1, 1', 1", 2, 2', 2" are arranged to engage with a vessel at two different heights. However, in other examples, the gripping elements are arranged to engage with a vessel at more than two different heights (e.g., at three different heights or at four different heights).

In addition or alternatively, in some examples the gripping elements extending in one direction from a central portion of an insert can be arranged to engage with a vessel at different heights. For instance, the gripping elements extending in one direction from a central portion can have different lengths. In one example, the gripping elements can be arranged to grip a vessel at positions disposed along a helical path over the vessel's exterior (compared to the example of **FIG. 2** in which the points of contact of the first and second gripping elements are arranged in a plane perpendicular to the axial direction).

Several aspects of an insert for a vessel holder of an automated analysis system have been discussed in the preceding sections in connection with **FIG. 1** and **FIG. 2****.** A second example of an insert for a vessel holder of an automated analysis system will subsequently be discussed in connection with **FIG. 3** and **FIG. 4****.**

The insert 3 for a vessel holder of an automated analysis system comprises a cylindrical body 22 including a plurality windows 23 formed therein, a first subset of the windows 23' being located at a first height of the cylindrical body 22 and a second plurality of windows 23" being located at a second height of the cylindrical body 22 different from the first height and a plurality of gripping elements 1, 1', 1", 2, 2', 2" configured to elastically engage with a vessel 10 when the vessel 10 is being inserted into the vessel holder, the gripping elements being arranged in the first and second subsets of windows 23', 23".

The insert of **FIG. 3** and **FIG. 4** can have a similar arrangement as to the body 22 and the first and second gripping elements 1, 1', 1", 2, 2', 2" as described above in connection with **FIG. 1** and **FIG. 2****.** However, compared to the insert described above in connection with **FIG. 1** and **FIG. 2****,** a central portion to which first and second sets of gripping elements 1, 1', 1", 2, 2', 2" are attached is merely an optional feature for the inserts described in connection with **FIG. 3** and **FIG. 4****.**

As already discussed above, the cylindrical body 22 of the insert including a plurality windows 23 formed therein can be a one piece component. For example, the cylindrical body 22 can be formed by injection-molding. Moreover, the gripping elements 1, 1', 1", 2, 2', 2" can also be integral with the body 22 (and, optionally, formed in a single injection-molding process).

In the example of **FIG. 2****,** the body 22 includes two sets of windows 23 arranged at two different heights. In other examples, the body 22 can include more than two sets of windows 23 arranged at more than two different heights (e.g., three or four sets of windows arranged at three or four different heights).

Furthermore, in the example of **FIG. 2****,** two windows are arranged above each other (i.e., spaced apart in the axial direction but not in a circumferential direction). However, in other examples the windows can be arranged axially spaced apart but offset in a circumferential direction. In addition or alternatively, the windows can have different heights and different widths.

The body 22 of the insert 3 of **FIG. 3** includes an optional gap 25 extending in an axial direction. In the example of **FIG. 3****,** the gap 25 can extend over the complete height of the body 22 of the insert 3. This can be helpful when the insert 22 is inserted into a rack. The gap 25 allows the insert 2 to be compressed circumferentially (i.e., a diameter of the rack can be reduced). A so compressed insert can be inserted into a corresponding receptacle of a rack and expand (at least to a certain degree) to engage with the receptacle of the rack. In this manner, a friction fit of the insert in the receptacle of the rack can be achieved.

In other examples, the gap 25 can be a result of the manufacturing process. For example, insert 3 can comprise (consist of) a metal. In some examples, the insert 3 can be formed of a metal sheet which is subsequently cut and/or stamped to define the body 22 and the gripping elements 1, 1', 1", 2, 2', 2" (and optional additional features of the insert). The cylindrical shape of the insert 3 can be defined in a subsequent manufacturing step (e.g., by rolling the metal sheet) which leaves a gap. This manufacturing process starting from a flat metal sheet can also be used to fabricate the other inserts discussed in the present disclosure.

In other examples, the insert 3 comprises (consists of) a plastic material. Such inserts can be produced by injection-molding which also can be facilitated when the insert has a gap 25 as shown in the insert of **FIG. 3****.**

The gap 25 can extend over less than 20° in a circumferential direction of the body 22 (in a relaxed state of the body 22). In other examples, the gap can extend over larger angular ranges in circumferential direction of the body 22 (e.g., between 20° and 60° in a circumferential direction of the body 22).

In other examples, a gap can be configured so that a label of the vessel can be read through the gap when the vessel has been inserted into the insert in a rack. Vessels (e.g., test tubes) are frequently provided with labels (e.g., including a bar code or a different machine-readable code) indicating, e.g., a patient from who the sample is taken. It might be beneficial if these labels can be read without removing the vessel from its rack.

An example gap arranged to read a label of a vessel can extend over 30° to 115° along a circumferential direction of an insert. In addition or alternatively, the gap can extend over more than 60% (e.g., more than 80% of an axial extension or height of the insert). In this manner, a label can be read through the gap if a vessel is inserted into the insert in an appropriate orientation. The inserts discussed in connection with **FIG. 1** and **FIG. 2** can also include gaps as discussed previously.

After the cylindrical body 22 and the gap have been treated in detail in connection with **FIG. 3** and **FIG. 4****,** different optional features of the gripping elements will be discussed subsequently. Even though these optional features will be discussed based on the example insert of **FIG. 3** and **FIG. 4****,** these features can also be used in other inserts described in the present disclosure.

As can be seen in **FIG. 3****,** the gripping elements 1, 1', 1", 2, 2', 2" each are formed so that an engagement area with which a vessel inserted into the insert is gripped has a curved shape in a plane perpendicular to the axial axis of the insert where a center of curvature is located over an interior surface of each gripping element. In the example of **FIG. 3****,** each gripping element 1, 1', 1", 2, 2', 2" describes a section of a circle (e.g., between 10° and 60°, or between 30° and 45°). This can be beneficial to grip substantially cylindrical vessels. When the sections of the circle described by the gripping elements have a similar radius of curvature as the outer surface of a vessel to be gripped, this can improve the engagement of the gripping element with the vessel.

In other examples, the points of contact of the gripping elements can be shaped differently. In one example, the gripping elements can have a substantially linear extension in a plane perpendicular to the axial axis of the insert. In still other examples, the gripping elements 1, 1', 1", 2, 2', 2" each are formed so that an engagement area with which a vessel inserted into the insert is gripped has a curved shape in a plane perpendicular to the axial axis of the insert where a center of curvature is located over an exterior surface of each gripping element. In this example, the curvature of the engagement area of the gripping elements is opposite to the curvature the engagement area of the gripping elements 1, 1', 1", 2, 2', 2" shown in **FIG. 3****.** In the examples of **FIG. 1** to **FIG. 5****,** the elastic gripping elements have been described as flexible elements formed of a sheet of material (e.g., a plastic or metal material). In addition, several gripping elements which have been described in connection with **FIG. 1** to **FIG. 5** include generally bow-shaped engagement portions. However, the gripping elements of the present disclosure can be formed and shaped in many different ways. In one example, a gripping element can have a hook-shape. In still other examples, a gripping element can have a straight shape. In addition or alternatively, the gripping elements can include engagement elements disposed on the respective engagement areas (e.g., protrusions or recesses). In still other examples, the gripping elements include a piece of compressible material (e.g., a patch of foamed material). In these examples, the gripping element can grip a vessel to be inserted in the insert by a restoring force of the compressed compressible material.

After several inserts and their components of the inserts of the present disclosure have been discussed predominantly qualitatively in connection with **FIG. 1** to **FIG. 4****,** several quantitative aspects of example inserts will be discussed subsequently in connection with **FIG. 5** and **FIG. 6****.**

**FIG. 5** shows a top view of an insert in a plane perpendicular to the axial axis of the insert. As can be seen, the insert can form a cylindrical inner volume 11 (e.g., bounded by inner walls of a cylindrical body). A diameter d of the inner volume 11 of the insert can be between 5 mm and 40 mm (e.g., between 10 mm and 30 mm). However, the inserts described herein can also have smaller or larger inner diameters to be able to receive smaller or larger vessels.

Moreover, three gripping elements 1, 1', 1" are disposed about a circumference of the insert. In the example of **FIG. 5****,** the gripping elements 1, 1', 1" are spaced apart by and angle of 120° in the circumferential direction relative to each other. In other examples the circumferential spacing α₁, α₂ can be different between different gripping elements. Furthermore, a diameter d_{G} of the gap 25 can be between 1 mm and 10 mm.

**FIG. 6** illustrates several additional optional aspects of the inserts of the present disclosure. In particular, the inserts described herein can have one or more of the following dimensions.

A height h of the inserts can be between 20 mm and 90 mm (e.g., between 35 mm and 70 mm). An outer diameter D of the insert can be between 5 mm and 40 mm (e.g., between 10 mm and 30 mm).

In addition or alternatively, a height of a first contact area of a first set of gripping elements 1, 1' can be between 20 mm and 90 mm (e.g., between 35 and 55 mm) spaced apart axially from a bottom end of the insert (i.e., and end located at the opposite side of the insert compared to the side where a vessel is to be inserted). A height of a second contact area of a second set of gripping elements 2, 2' can be between 0 mm and 40 mm (e.g., between 5 and 20 mm) spaced apart axially from a bottom end of the insert.

A distance between the first and second contact areas can be between 20 mm and 70 mm. A distance between the first and second contact areas can be between 40% and 90% of a height of the insert. In some examples, a larger axial spacing between the first and second contact areas can improve the accuracy with which a vessel is aligned in the insert.

In addition or alternatively, a height dᵤ of an upper portion 8 of the body 22 of the insert can be between 1 mm and 15 mm (e.g., between 2 mm and 8 mm). A height of a lower portion 7 can range between 1 mm and 15 mm (e.g., between 2 mm and 8 mm). A thickness of a wall r_{c} of the body 22 can be smaller than 2 mm (e.g., smaller than 1 mm).

Example dimensions of the gripping elements 1, 1', 2, 2' will be discussed next. As can be seen in **FIG. 6****,** the gripping elements 1, 1', 2, 2' can include a first section extending from an attachment point of the respective gripping element 1, 1', 2, 2', a second portion distal (i.e., farther away from the attachment point) of the first portion and a third portion distal of the second portion. In the example of **FIG. 6****,** the first portion is substantially straight in a cross-section in an axial plane (this does not exclude that the first section curves as shown in connection with **FIG. 5**). The first portion extends towards a central axial axis of the insert. The second portion curves away from the interior of the insert (i.e., the center of curvature lies over a face of the gripping element facing away from the inner volume of the insert). In this manner, the second portion forms the engagement area of the respective gripping element. The third portion is again substantially straight in a cross-section in an axial plane (this does not exclude that the first section curves as shown in connection with **FIG. 5**). The first portion extends away from the central axial axis of the insert.

In other example, each gripping elements include one or more additional curved or straight portions in the cross-section in an axial plane.

In some example, a gripping element 1, 1', 2, 2' can have the following dimensions.

A length of the first portion l_{g1}, l_{g2} of the gripping element can be between 5 mm and 30 mm (e.g., between 10 mm and 20 mm). The length of the first portions of a first set of gripping elements l_{g1} can be different than the length of the first portions of a second set of gripping elements l_{g2}.

A bending angle R₄ of the second portion can be between 70° and 170° (e.g., between 100° and 150°). An angle between the first portion of the gripping element and a wall of the body 22 can be between 5° and 30° (e.g., between 10° and 20°).

A length of the third portion lₑ₁, lₑ₂ of the gripping element can be between 1 mm and 10 mm (e.g., between 20 mm and 5 mm).

In connection with **FIG. 1** to **FIG. 6****,** different aspects of the inserts of the present disclosure have been discussed based on example inserts having a cylindrical body. In the following, different alternative geometries will be discussed in connection with **FIG. 7** to **FIG. 11****.**

**FIG. 7** shows an insert 3 including a central portion 4 and a plurality of gripping elements 1, 1', 1", 2, 2', 2" attached to the central portion. In some examples, the insert 3 consists of the central portion 4 and the gripping elements 1, 1', 1", 2, 2', 2" (i.e., the insert 3 does not include additional elements). As can be seen in **FIG. 7****,** the insert does not have a cylindrical body as described in connection with the inserts above. In some examples, the insert of **FIG. 7** can be inserted into a rack by frictionally engaging an outer surface of the central portion 4 of the insert 4 with a respective surface of a rack. In other examples, the insert 3 of FIG. 7 can be formed integrally with a rack including multiple inserts.

As can be seen in **FIG. 7****,** the central portion 4 includes a gap 25. In other examples, the central portion 4 can extend about the complete circumference (e.g., 360°) of the insert. As explained above, the gap 25 can be arranged to allow that a label of a vessel can be read when the vessel is arranged in the insert. In addition or alternatively, the gap can allow the insert 3 to flex in a circumferentially direction to facilitate insertion into a rack.

The gripping elements 1, 1', 1", 2, 2', 2" of the insert 3 of **FIG. 7** have three portions 50, 51, 52 extending from a proximal (i.e., near an attachment point of the respective gripping element) to a distal (i.e., near a free end of the gripping element) end of the respective gripping element. In some examples, the three portions 50, 51, 52 can be configured and arranged as discussed above in connection with **FIG. 6****.**

In the example of **FIG. 7****,** a thickness (i.e., an extension in a radial direction) of the central portion 4 can be larger than an average thickness of the gripping elements 1, 1', 1", 2, 2', 2". This can improve a stiffness of the insert.

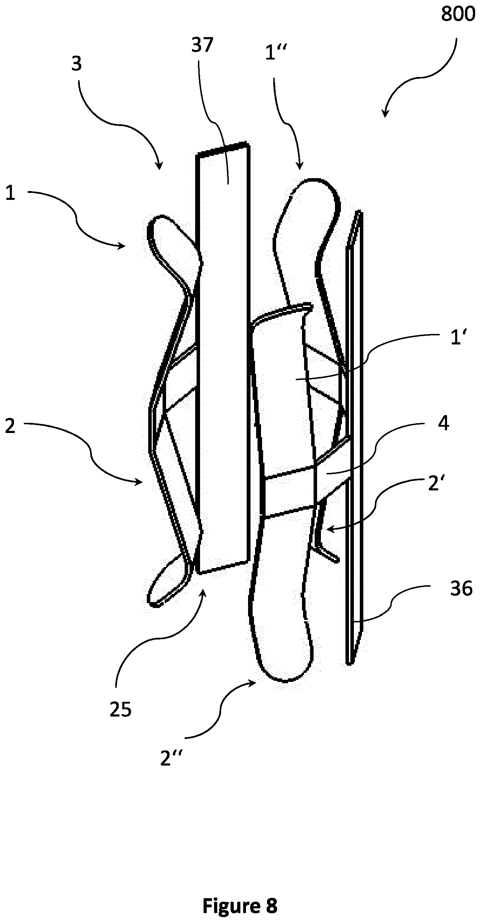

**FIG. 8** depicts a further example of an insert 3 of the present disclosure. The insert 3 includes a central portion 4, multiple gripping elements 1, 1', 1", 2, 2', 2" and two axial bars 36, 37. As the inset of **FIG. 7** the insert of **FIG. 8** does not have a body forming windows in which the gripping elements are disclosed.

In addition, again as in **FIG. 7****,** the multiple gripping elements 1, 1', 1", 2, 2', 2" are attached to the central portion and extend in two opposite axial directions.

The central portion 4 of the insert 3 of **FIG. 8** does not have an annular shape as discussed in connection with several inserts in the preceding sections. Rather, the central portion 4 of the insert includes a band enclosing a polygonal area. In other words, the central portion 4 includes a band which is bent at a plurality of sharp bends (eight bends in the example of **FIG. 8**).

This central portion including a band enclosing a polygonal area can also be used in the inserts of **FIG. 1** to **FIG. 6** (replacing the central portion including an annular element). In still other examples, upper and/or lower portions (e.g., upper portion 8 and lower portion 7 as shown in **FIG. 1** to **FIG. 6**) can include (or consist of) a band embracing a polygonal area (e.g., a band which is bent at a plurality of sharp bends).

A second optional feature of the insert 3 of **FIG. 8** are the two axial bars 36, 37 extending in an axial direction over a height of the insert. As can be seen in **FIG. 8****,** the axial bars 36, 37 and the central portion can overlap. In other examples, the insert can have a different number of axial bars (e.g., one or more than two axial bars).

The gripping elements 1, 1', 1", 2, 2', 2" of the insert 3 of **FIG. 8** can be configured as described above. However, as can be seen in **FIG. 8****,** the gripping elements 1, 1', 1", 2, 2', 2" only curve in one dimension (i.e., in a plane parallel to the axial axis). Other than the gripping elements discusses before, the gripping elements 1, 1', 1", 2, 2', 2" of the insert 3 of **FIG. 8** do not curve in a plane orthogonal to the axial axis.

The gripping elements 1, 1', 1", 2, 2', 2" having only a curvature in one dimension can be easier to manufacture in some examples (e.g., when the insert is made from a sheet of metal). The gripping elements 1, 1', 1", 2, 2', 2" having only a curvature in one dimension can also be employed in the inserts of **FIG. 1** to **FIG. 6****.**

The insert 3 of **FIG. 8** can be fabricated from a metal (e.g., a spring steel). In some examples, the insert 3 of **FIG. 8** can be fabricated from a single sheet of metal. In this case, it can be advantageous that the central portion 4 and the axial bars 36, 37 contain no curved surfaces. These elements can be easily folded out of a metal sheet.

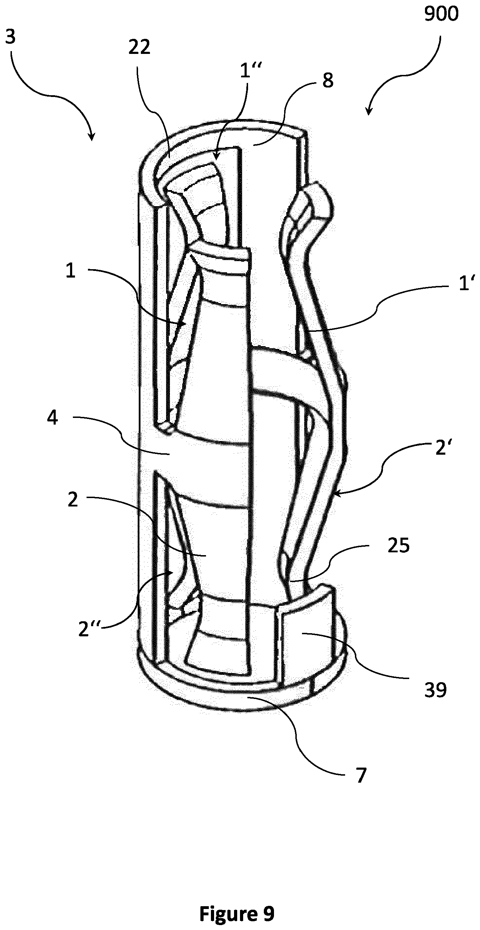

**FIG. 9** depicts another example of an insert 3 of the present disclosure. As can be seen, the insert 3 is configured similarly as the insert shown in **FIG. 1****.** However, the insert 3 of **FIG. 9** does not have a closed cylindrical body. Rather, the body 22 of the insert 3 includes a first portion which forms windows in which gripping elements are disposed. Other gripping elements of the insert 3 are not disposed in a window. The first portion only extends about a portion of the circumference of the insert (e.g., between 90° and 150° of the circumference of the insert).

The central portion 4 of the insert of **FIG. 9** extends about a portion of the insert's 3 circumference (where the portion is larger than the portion over which the first portion extends). The central portion 4 has a gap 25 as discussed above.

In addition, the body includes an annular lower portion 7 forming a lower end (in an axial direction) of the insert 3. Thus, the gap in the insert 3 of **FIG. 9** does not extend over a complete height of the insert (as the gap in, e.g., the insert of **FIG. 3**). However the gap 25 can still suffice to read a label disposed on a vessel when the vessel is inserted in the insert. The annular lower portion can improve the stiffness of the insert.

The lower portion can include an optional reinforcement element 39 coupled to the lower portion 7 in an area of the gap. This reinforcement element can further improve the stability of the insert.

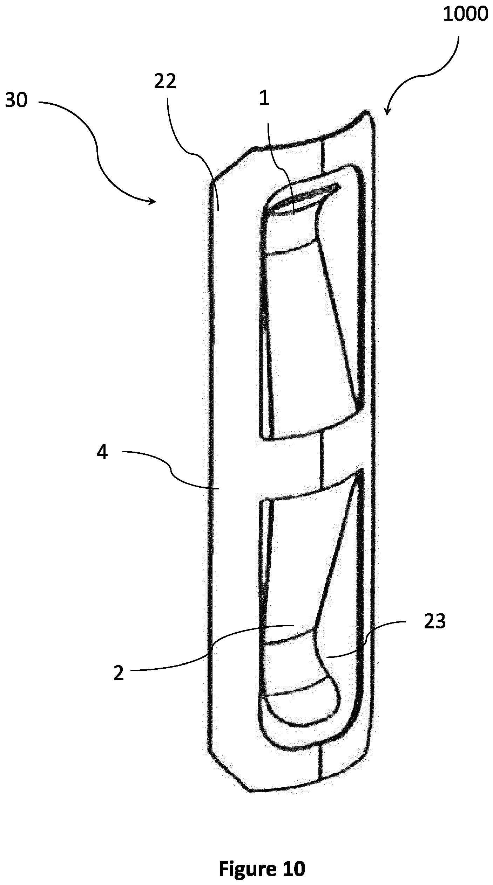

**FIG. 10** depicts still another example of an insert 3 of the present disclosure. The insert 3 for a vessel holder configured to secure a vessel being inserted into the vessel holder is shaped to extend about the vessel to be inserted into the vessel holder, the insert comprising two or more separate holding assemblies 30, wherein each holding assembly 30 includes at least two gripping elements 1, 1', 1", 2, 2', 2" configured to elastically engage with a vessel 10 when the vessel is being inserted into the vessel holder, each two or more holding assemblies 30 extending about a disjunct portion of a circumference of the vessel holder.

In the example of **FIG. 10****,** the modular insert consists of three holding assemblies 30 (one of which is depicted in **FIG. 10**). As can be seen in **FIG. 10****,** the holding assembly 30 extends about 120° around the circumference of an assembled insert including three holding assemblies 30. In other examples, an assembled insert consists of more or less holding assemblies (e.g., two or four holding assemblies).

The holding assembly include a central portion 4 to which gripping elements 1, 2 are attached. As can be seen, the holding assembly includes a partial body 22 defining windows 23 in which the gripping elements 1, 2 are disposed. The assembled insert consisting of three holding assemblies 30 as shown in FIG. 10 can look similar to the insert of FIG. 1. Accordingly, the features described in connection with FIG. 1 can also be implemented in the examples of FIG. 10. On the other hand, the integral inserts described in connection with FIG. 1 to FIG. 9 above can also be assembled out of two or more holding assemblies as discussed in connection with FIG. 10.

In the preceding sections, multiple different aspects of inserts for vessel holders have been discussed. In the following sections, it will be explained in connection with FIG. 11 to FIG. 18b how these inserts can be inserted into or integrated (not according to the invention) in a rack.

In the following sections, the racks are equipped with particular inserts, e.g., corresponding to the inserts shown in FIG. 1. However, what will be described below is not specific to the particular inserts of FIG. 1. Rather, all other inserts described above can likewise be inserted or integrated (not according to the invention) in a rack as described in the subsequent sections.

FIG. 11 shows a partial view of a rack 20 which is not part of the present invention, including an array of inserts 3. Each insert is part of a vessel holder for a single vessel 10. In the example of FIG. 11, the rack has a substantially box-shaped housing 26 and the vessel holders are arranged in three parallel rows. Vessels 10 can be inserted into holes in an upper surface 27 of the rack 20. The exact shape of the rack 20, a number of inserts 3 and an arrangement of the inserts can be chosen freely depending on the circumstances. For instance, the vessel holders including the inserts 3 can be arranged in any array. A number of vessels 10 a rack can hold can be arbitrary.

As can be seen in FIGS. 11 to 13, the vessels 10 are gripped by the gripping elements of the respective inserts 3 and thereby aligned (e.g., centered). The rack 20 including one or more vessels can be introduced into an automated analysis system in which the content of the vessels can be analyzed.

According to the invention, the inserts 3 are separate elements that can be introduced into a corresponding recess of the rack 20. In one example, each insert 3 has one or more locking elements (e.g., clips) which engage with corresponding elements of the rack 20. According to the invention, the inserts 3 can be releasably inserted into the rack 20. In this manner, the same rack 20 can be dynamically configured with different inserts 3. In addition, damaged (e.g., broken) inserts can be easily replaced. However, in other examples which are not part of the present invention, the inserts 3 cannot be released after an initial insertion.

In still other examples not according to the invention, the inserts 3 can be formed integrally with a rack (e.g., rack 20 as shown in FIG. 11 to FIG. 13). This can provide for a particularly efficient fabrication of the
complete system and is facilitated by the particularly simple design of the inserts of the present disclosure.

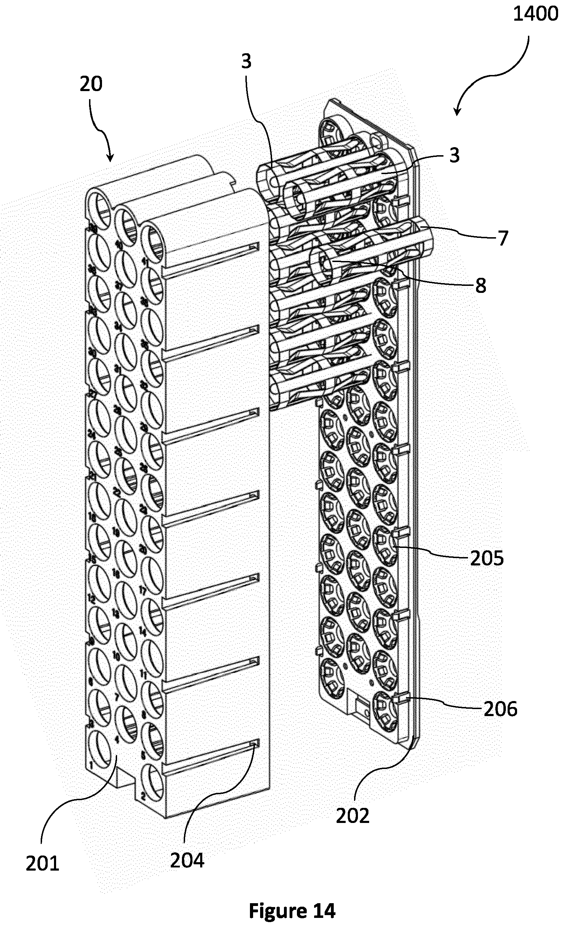

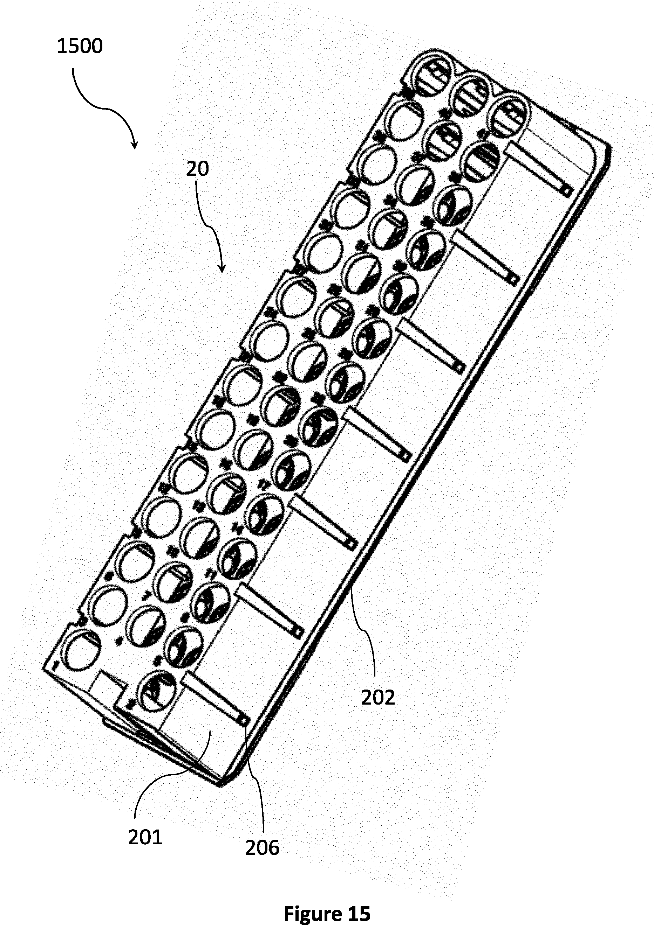

A rack according to the invention is depicted in **FIG. 14** and **FIG. 15****.** The rack 20 in **FIG. 14** has a "sandwich configuration." In other words, the rack 20 includes an upper part 201 and a lower part 202 which are detachably connectable (as shown in **FIG. 15**). The term "detachably connectable" means in the present disclosure that two parts can be connected and detached during their normal use.

In the example of **FIG. 14****,** the upper part 201 of the rack 20 forms the upper surface through which vessels (not shown in **FIG. 14**) can be inserted into the rack 20. In addition, the upper part 201 of the rack 20 forms side walls of the assembled rack. The lower part 202 forms the bottom surface of the assembled rack.

In the example of **FIG. 14****,** the lower part 202 is equipped with a plurality of mounting structures 205 for inserts 3. Each mounting structure 205 is configured to receive an insert 3. In the example of **FIG. 15****,** each mounting structure 205 includes a circumferential recess shaped to receive a lower portion 7 of a body of a respective insert 3. In addition, each mounting structure 205 has a plurality of engagement elements configured to engage with the lower portion 7 of a body of the respective insert 3. For example, each engagement element can include a flexible element arranged and configured to flexibly engage with the lower portion 7 of the body of the insert 3. In other examples, the mounting structure 205 can have only a circumferential recess and/or other engagement elements than the elements shown in **FIG. 14****.**

Even though **FIG. 14** shows a rack 20 having mounting structures 205 for inserts whose lower portions 7 include bands enclosing a polygonal shape, the rack 20 of **FIG. 14** can also have mounting structures for differently shaped inserts (e.g., the inserts of **FIG. 1** to **FIG. 6** describe above).

In some examples, the upper part 201 can include mounting structures similar to the mounting structures 205 of the lower part 202. For example, mounting structures can be arranged at an inner surface of the upper part to engage with an upper portion 7 of a body of a respective insert 3.

Optionally, the upper and lower parts 201, 202 of the rack can include corresponding coupling elements 204, 205 for coupling the parts. In the example of **FIG. 14****,** the coupling elements include multiple clips 206 arranged around the circumference of the lower part 202 and corresponding recesses 204 in the sidewall of the upper part 201. When the upper part 201 is arranged over the lower part 202 and pushed towards the lower part 202, the clips 206 engage with the recesses 206 to couple the upper and lower parts 201, 202. In other examples, the coupling elements can be arranged and configured in different ways (e.g., including different flexible coupling elements than clips or protrusions and corresponding recesses).

The rack of **FIG. 14** can be assembled as follows. In a first step, a selected number of inserts 3 is mounted in respective mounting structures 205 of the lower part 202. **FIG. 14** depicted a lower portion 202 carrying multiple inserts 3. After a desired number of inserts 3 have been mounted in the mounting structures 3 the upper part 201 of the rack 20 is attached to the lower part 202. Optionally, the upper portions 8 of the inserts 3 can engage with corresponding mounting structures of the upper part 201. **FIG. 15** depicts a rack 20 in the assembled configuration. At a later time, the rack 20 can be disassembled by detaching the detachably connectable upper and lower parts 201, 202, and re-assembled. For instance, the rack 20 can be equipped with a different number and/or type of inserts 3.

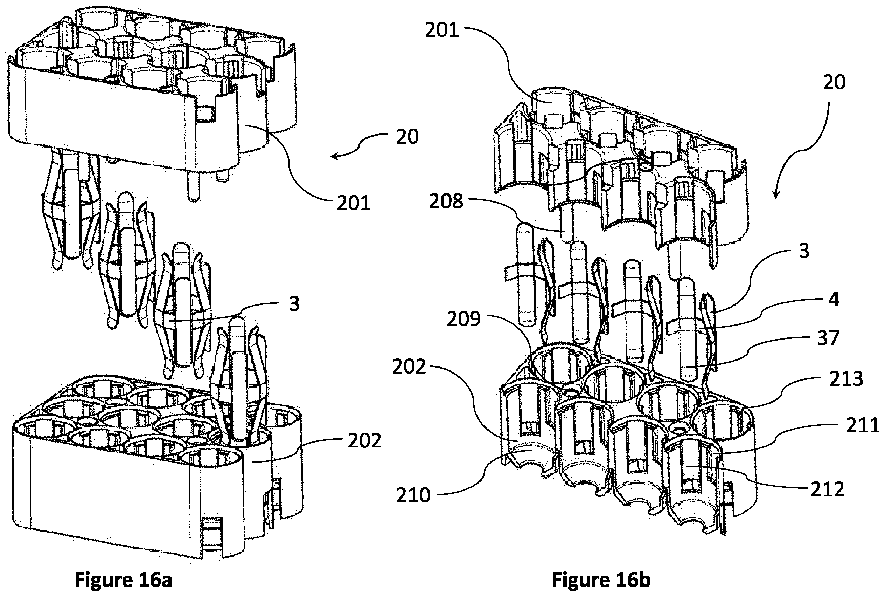

A third example of a rack is depicted in **FIG. 16a** to **FIG. 18b****.** Similar to the rack in **FIG. 14****,** this rack 20 has a "sandwich configuration." However, the rack 20 of **FIG. 16a** to **FIG. 18b** includes several differences compared to the rack of **FIG. 14****.** The configuration of the rack 20 of **FIG. 16a** to **FIG. 18b** will subsequently be explained.

As can be seen in **FIG. 16a** and **FIG. 16b****,** the rack includes an upper part 201 and a lower part 202 being detachably connectable.

In the example of **FIG. 16a****,** the upper and lower parts 201, 202 each have a plurality of recesses to receive inserts 3. In the example of **FIG. 16a** and **FIG. 16b****,** the inserts3 have a configuration similar to the configuration discussed in connection with **FIG. 8****.** The inserts have several axial struts 37 and a central portion 4 that encloses a polygonal area.

The upper and lower parts 201, 202 are seized such that a part of the inserts 3 extending on one side of the central portion 4 is received in the upper part 201 whereas a part of the inserts 3 extending on the opposite side of the central portion 4 is received in the lower part 202. A part of the central portion 4 is received in each of the upper and lower parts 201, 202. In another example the central portion can be received completely in the upper part 201 or the lower part 202.

As depicted in **FIG. 16b****,** the recesses in the upper and lower parts 201, 202 for receiving the inserts 3 can include surface features corresponding to an outer surface of the insert 3. For example, the upper and lower parts 201, 202 can include axial recesses 211 to receive the axial struts 37 of the insert 3. In addition, the upper and lower parts 201, 202 can include circumferential recesses 213 which are shaped to conform to the outer shape of the central portion 4 of the inserts 3 (e.g., the circumferential recesses 213 can have a polygonal shape or a circular shape). Moreover, the upper and lower parts 201, 202 can include optional recesses 212 to receive the gripping elements of the insert 3. These recesses 212 can be seized to allow the gripping elements to flex in a radial direction (e.g., when comparatively large-diameter inserts are inserted in the vessel holders).

In summary, the plurality of recesses 211, 212, 213 in the upper and lower parts 201, 202 can form a surface relief which can enclose and secure in place the insert 3. Even though **FIG. 16a** to **FIG. 18b** show inserts similar to the inserts of **FIG. 8****,** the sandwiched structure of the rack can also be employed in combination with the other inserts of the present disclosure. In this case, the surface features of the recesses corresponding to an outer surface of the respective insert.

Optionally, the upper or lower part 201, 202 can include stops 210 to limit an axial movement of a vessel inserted into the inserts 3. In one example, the stop 210 can include a concave surface. This can be helpful to center the vessels in the vessel holders formed by the inserts 3. Furthermore, the upper and lower parts 201, 202 include one or more pins 208 and one or more holes 209 configured to receive the one or more pins 208 to couple the upper and lower parts 201, 202. In other examples, the upper and lower parts 201, 202 have other coupling elements configured to couple the upper and lower parts 201, 202.

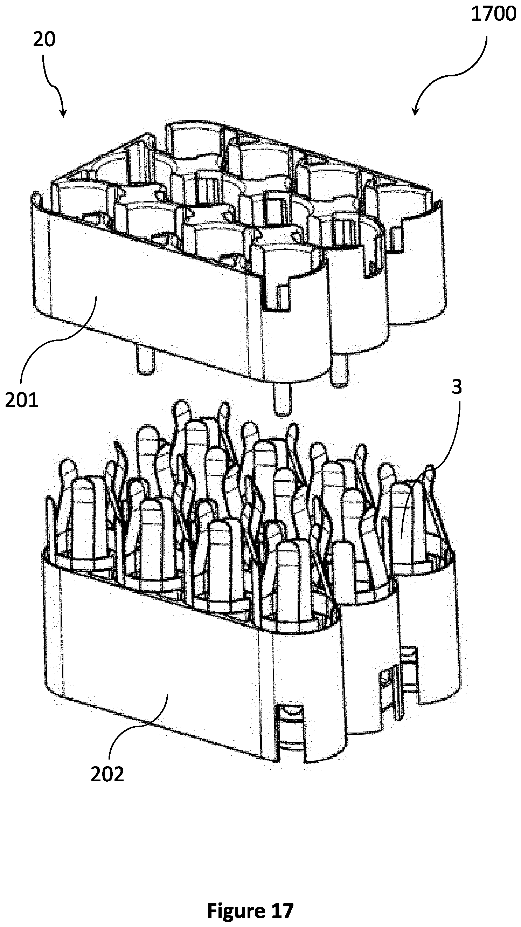

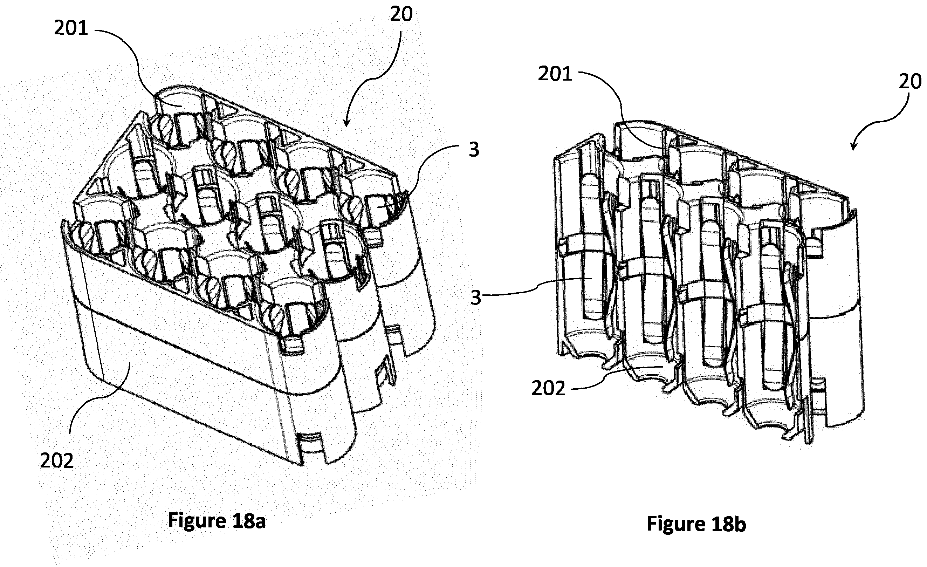

The rack of **FIG. 16a** can be assembled as follows. In a first step, a selected number of inserts 3 is inserted into the recesses of the upper or lower parts 201, 202 of the rack 20. A rack 20 in this assembly state is depicted in **FIG. 17****.** In a subsequent step, the respective other part of the upper and lower parts 201, 202 is coupled to the other part carrying the inserts 3. In this manner, a rack 20 as shown in **FIG. 18a** is assembled. The seat of the inserts 3 in the surface features of the recesses of the upper and lower parts 201, 202 is illustrated in the cutaway view of **FIG. 18b****.** At a later time, the rack 20 can be disassembled by detaching the detachably connectable upper and lower parts 201, 202, and re-assembled. For instance, the rack 20 can be equipped with a different number and/or type of inserts 3.

## Claims

1. A rack (20) including multiple vessel holders, each vessel holder including an insert (3) for a vessel of an automated analysis system, each insert (3) comprising:
at least one first gripping element (1; 1'; 1") configured to elastically engage with a vessel (10) at a first position of the vessel (10) when the vessel is being inserted into the vessel holder;
at least one second gripping element (2; 2'; 2") configured to elastically engage with a vessel (10) at a second position of the vessel (10) when the vessel is being inserted into the vessel holder;
a central portion (4) arranged between the first and second gripping elements (1; 1'; 1";2;2';2"),
wherein the inserts (3) are releasably inserted into the rack (20);
wherein the rack (20) includes an upper part (201) and a lower part (202) which are detachably connectable, wherein the lower part (202) comprises recesses to receive the inserts; and
**characterized in that**:
the first and second gripping elements (1; 1'; 1"; 2; 2'; 2") of each insert (3) are attached to the central portion (4) and each have free ends (5) opposite to respective attachment sites to the respective central portion (4),
wherein the rack is configured to be assembled by:
in a first step, inserting a selected number of inserts (3) in the recesses of the lower part (202) of the rack, and
in a subsequent step, coupling the upper part (201) to the lower part (202) carrying the inserts.

2. The rack of claim 1, wherein the lower part defines circumferential recesses which are shaped to conform to an outer shape of the central portions (4) of the inserts (3), wherein the recesses have a polygonal shape and wherein each insert (3) has central portion (4) including a band enclosing a polygonal area.

3. The rack of claim 1 or claim 2, wherein the upper part (201) includes recesses (212) to receive the first gripping elements (1; 1'; 1") of the inserts (3).

4. The rack of claim 3, wherein the recesses (212, 213) in the upper and lower parts (201, 202) form a surface relief which encloses and secures in place the inserts (3).

5. The rack of any one of claims 1 to 4, wherein each insert has three first gripping elements (1; 1'; 1") and three second gripping elements (2; 2'; 2").

6. The rack of any one of claims 1 to 5 wherein each central portion (4) includes a gap (25).

7. The rack of any one of the preceding claims, wherein each insert (3) has a generally cylindrical body (22) including the central portion (4) of the respective insert (3).

8. The rack of any one of the preceding claims, wherein each insert (3) further comprises:
an upper portion (8) including an annular element; and
a lower portion (7) including an annular element,
wherein the upper and the lower portions (7, 8) both are coupled to the central portion (4) of the respective insert (3) by one or more axial struts (9).

9. The rack of any one of the preceding claims, wherein each insert (3) includes a body (22) which comprises the central portion (4) of the respective insert (3), the body having a plurality of windows (23) formed therein, wherein each of the gripping elements (1; 1'; 1"; 2; 2'; 2") of the respective insert (3) is located in one of the windows (23).

10. The rack of any one of the preceding claims wherein the central portion (4), the first and second gripping elements (1; 1'; 1"; 2; 2'; 2") and optionally the body (22) of each of the inserts (3) are formed integrally.

11. The rack of any one of the preceding claims wherein each gripping element (1; 1'; 1"; 2; 2'; 2") includes a bow-shaped section curving away from a vessel (10) to be engaged and configured to engage with a vessel (10) at a point located on the respective bow-shaped section.

12. The rack of any one of the preceding claims, wherein each insert (3) further comprises one or more locking elements (12), wherein the locking elements (12) are clips configured to latch into a corresponding recess to secure the insert (3) in the rack (20) when the inset (3) is inserted in the rack (20).

13. The rack of any one of the preceding claims wherein each insert includes an opening (25) extending over more than 60° of the insert's (3) circumference and over at least 60% of the insert's (3) height.

14. The rack of any one of the preceding claims wherein the gripping elements (1; 1'; 1 "; 2; 2', 2") are configured to center a vessel (10) in the vessel holder at at least two axial positions of the vessel.

15. An automated sample processing apparatus comprising:
the rack (20) including one or more inserts (3) of any one of the preceding claims, and one or more tools configured to automatically engage with vessels (10) arranged in the inserts (3).

## Patentansprüche

1. Gestell (20), welches mehrere Behälterhalterungen einschließt, wobei jede Behälterhalterung einen Einsatz (3) für einen Behälter eines automatisierten Analysesystems einschließt, wobei jeder Einsatz (3) umfasst:
mindestens ein erstes Greifelement (1; 1'; 1"), welches ausgestaltet ist, um elastisch in Eingriff mit einem Behälter (10) an einer ersten Position des Behälters (10) zu kommen, wenn der Behälter in die Behälterhalterung eingesetzt wird;
mindestens ein zweites Greifelement (2; 2', 2"), das ausgestaltet ist, um elastisch in Eingriff mit einem Behälter (10) in einer zweiten Position des Behälters (10) zu kommen, wenn der Behälter in die Behälterhalterung eingesetzt wird;
einen zentralen Abschnitt (4), der zwischen den ersten und zweiten Greifelementen (1; 1'; 1"; 2; 2'; 2") angeordnet ist,
wobei die Einsätze (3) freigebbar in das Gestell (20) eingesetzt werden;
wobei das Gestell (20) ein oberes Teil (201) und ein unteres Teil (202) einschließt, die lösbar verbindungsfähig sind, wobei das untere Teil (202) Aussparungen umfasst, um die Einsätze aufzunehmen; und **dadurch gekennzeichnet ist, dass**:
die ersten und zweiten Greifelemente (1; 1'; 1"; 2; 2'; 2") jedes Einsatzes (3) an dem zentralen Abschnitt (4) befestigt sind und jedes freie Enden (5) aufweist, die jeweiligen Befestigungsstellen an dem jeweiligen zentralen Abschnitt (4) gegenüber liegen,
wobei das Gestell ausgestaltet ist, um wie folgt montiert zu werden:
in einem ersten Schritt Einsetzen einer ausgewählten Anzahl von Einsätzen (3) in die Aussparungen des unteren Teils (202) des Gestells, und
in einem nachfolgenden Schritt Koppeln des oberen Teils (201) an das untere Teil (202), das die Einsätze trägt.

2. Gestell nach Anspruch 1, wobei das untere Teil umlaufende Aussparungen definiert, die so geformt sind, dass sie sich einer äußeren Form der zentralen Abschnitte (4) der Einsätze (3) anpassen,
wobei die Aussparungen eine vieleckige Form haben, und wobei jeder Einsatz (3) einen zentralen Abschnitt (4) aufweist, der ein Band einschließt, welches einen vieleckigen Bereich umschließt.

3. Gestell nach Anspruch 1 oder Anspruch 2, wobei das obere Teil (201) Aussparungen (212) einschließt, um die ersten Greifelemente (1; 1'; 1") der Einsätze (3) aufzunehmen.

4. Gestell nach Anspruch 3, wobei die Aussparungen (212, 213) in dem oberen und unteren Teil (201, 202) ein Oberflächenrelief bilden, welches die Einsätze (3) in Position umschließt und sichert.

5. Gestell nach einem der Ansprüche 1 bis 4, wobei jeder Einsatz drei erste Greifelemente (1; 1'; 1") und drei zweite Greifelemente (2; 2'; 2") aufweist.

6. Gestell nach einem der Ansprüche 1 bis 5, wobei jeder zentrale Abschnitt (4) einen Spalt (25) einschließt.

7. Gestell nach einem der vorhergehenden Ansprüche, wobei jeder Einsatz (3) einen allgemein zylindrischen Körper (22) aufweist, der den zentralen Abschnitt (4) des jeweiligen Einsatzes (3) einschließt.

8. Gestell nach einem der vorhergehenden Ansprüche, wobei jeder Einsatz (3) ferner umfasst:
einen oberen Abschnitt (8), der ein ringförmiges Element einschließt;
und einen unteren Abschnitt (7), der ein ringförmiges Element einschließt;
wobei sowohl der obere als auch der untere Abschnitt (7, 8) durch einen oder mehrere axiale Streben (9) an den zentralen Abschnitt (4) des jeweiligen Einsatzes (3) gekoppelt sind.

9. Gestell nach einem der vorhergehenden Ansprüche, wobei jeder Einsatz (3) einen Körper (22) einschließt, der den zentralen Abschnitt (4) des jeweiligen Einsatzes (3) umfasst, wobei der Körper eine Vielzahl von darin gebildeten Fenstern (23) aufweist, wobei jedes der Greifelemente (1; 1'; 1"; 2; 2'; 2") des jeweiligen Einsatzes (3) sich in einem der Fenster (23) befindet.

10. Gestell nach einem der vorhergehenden Ansprüche, wobei der zentrale Abschnitt (4), die ersten und zweiten Greifelemente (1; 1'; 1"; 2; 2'; 2") und gegebenenfalls der Körper (22) von jedem der Einsätze (3) integral gebildet sind.

11. Gestell nach einem der vorhergehen Ansprüche, wobei jedes Greifelement (1; 1'; 1"; 2; 2'; 2") ein bogenförmiges Teilstück einschließt, welches sich von einem Behälter (10) weg krümmt, mit dem der Eingriff erfolgen soll, und welches ausgestaltet ist, um mit einem Behälter (10) an einem Punkt in Eingriff zu kommen, der sich auf dem jeweiligen bogenförmigen Teilstück befindet.

12. Gestell nach einem der vorhergehenden Ansprüche, wobei jeder Einsatz (3) ferner ein oder mehrere Sperrelemente (12) umfasst, wobei die Sperrelemente (12) Klemmen sind, die ausgestaltet sind, um in eine entsprechende Aussparung einzurasten, um den Einsatz (3) in dem Gestell (20) zu sichern, wenn der Einsatz (3) in das Gestell (20) eingesetzt wird.

13. Gestell nach einem der vorhergehenden Ansprüche, wobei jeder Einsatz eine Öffnung (25) einschließt, die sich über mehr als 60° des Umfangs des Einsatzes (3) und über mindestens 60 % der Höhe des Einsatzes (3) erstreckt.

14. Gestell nach einem der vorhergehenden Ansprüche, wobei die Greifelemente (1; 1'; 1"; 2; 2'; 2") ausgestaltet sind, um einen Behälter (10) in der Behälterhalterung an mindestens zwei axialen Positionen des Behälters zu zentrieren.

15. Automatisierter Probenverarbeitungsapparat, umfassend:
das Gestell (20), welches einen oder mehrere Einsätze (3) gemäß einem der vorhergehenden Ansprüche einschließt, und
ein oder mehrere Werkzeuge, die ausgestaltet sind, um automatisch in Eingriff mit Behältern (10) zu kommen, die in den Einsätzen (3) angeordnet sind.

## Revendications

1. Bâti (20) comprenant de multiples supports de cuve, chaque support de cuve comprenant un insert (3) pour une cuve d'un système d'analyse automatisé, chaque insert (3) comprenant :
au moins un premier élément de préhension (1 ; 1' ; 1") configuré pour venir en prise de manière élastique avec une cuve (10) à une première position de la cuve (10) lorsque la cuve est insérée dans le support de cuve ;
au moins un second élément de préhension (2 ; 2' ; 2") configuré pour venir en prise de manière élastique avec une cuve (10) à une seconde position de la cuve (10) lorsque la cuve est insérée dans le support de cuve ;
une partie centrale (4) agencée entre les premier et second éléments de préhension (1 ; 1' ; 1" ; 2 ; 2' ; 2"),
les inserts (3) étant insérés de manière amovible dans le bâti (20) ;
le bâti (20) comprenant une partie supérieure (201) et une partie inférieure (202) qui peuvent être reliées de manière amovible, la partie inférieure (202) comprenant des évidements pour recevoir les inserts ; et
**caractérisé en ce que** :
les premier et second éléments de préhension (1 ; 1' ; 1" ; 2 ; 2' ; 2") de chaque insert (3) sont fixés à la partie centrale (4) et ont chacun des extrémités libres (5) opposées aux sites de fixation respectifs à la partie centrale respective (4),
le bâti étant configuré pour être assemblé par :
dans une première étape, l'insertion d'un nombre sélectionné d'inserts (3) dans les évidements de la partie inférieure (202) du bâti, et
dans une étape ultérieure, le couplage de la partie supérieure (201) à la partie inférieure (202) portant les inserts.

2. Bâti selon la revendication 1, la partie inférieure définissant des évidements circonférentiels qui sont façonnés pour se conformer à une forme extérieure des parties centrales (4) des inserts (3),
les évidements ayant une forme polygonale et chaque insert (3) ayant une partie centrale (4) comprenant une bande entourant une zone polygonale.

3. Bâti selon la revendication 1 ou selon la revendication 2, la partie supérieure (201) comprenant des évidements (212) pour recevoir les premiers éléments de préhension (1 ; 1' ; 1") des inserts (3).

4. Bâti selon la revendication 3, les évidements (212, 213) dans les parties supérieure et inférieure (201, 202) formant un relief de surface qui entoure et fixe en place les inserts (3).

5. Bâti selon l'une quelconque des revendications 1 à 4, chaque insert ayant trois premiers éléments de préhension (1 ; 1' ; 1") et trois seconds éléments de préhension (2 ; 2' ; 2").

6. Bâti selon l'une quelconque des revendications 1 à 5, chaque partie centrale (4) comprenant un espace (25).

7. Bâti selon l'une quelconque des revendications précédentes, chaque insert (3) ayant un corps généralement cylindrique (22) comprenant la partie centrale (4) de l'insert respectif (3).

8. Bâti selon l'une quelconque des revendications précédentes, chaque insert (3) comprenant en outre :
une partie supérieure (8) comprenant un élément annulaire ; et
une partie inférieure (7) comprenant un élément annulaire,
les parties supérieure et inférieure (7, 8) étant toutes les deux couplées à la partie centrale (4) de l'insert respectif (3) par une ou plusieurs entretoises axiales (9).

9. Bâti selon l'une quelconque des revendications précédentes, chaque insert (3) comprenant un corps (22) qui comprend la partie centrale (4) de l'insert respectif (3), le corps ayant une pluralité de fenêtres (23) formées à l'intérieur, chacun des éléments de préhension (1 ; 1' ; 1" ; 2 ; 2' ; 2") de l'insert respectif (3) étant situé dans l'une des fenêtres (23).

10. Bâti selon l'une quelconque des revendications précédentes, la partie centrale (4), les premier et second éléments de préhension (1 ; 1' ; 1" ; 2 ; 2' ; 2") et éventuellement le corps (22) de chacun des inserts (3) étant formés d'un seul tenant.

11. Bâti selon l'une quelconque des revendications précédentes, chaque élément de préhension (1 ; 1' ; 1" ; 2 ; 2' ; 2") comprenant une section en forme d'arc s'incurvant à l'opposée d'une cuve (10) à mettre en prise et configurée pour venir en prise avec une cuve (10) en un point situé sur la section en forme d'arc respective.

12. Bâti selon l'une quelconque des revendications précédentes, chaque insert (3) comprenant en outre un ou plusieurs éléments de verrouillage (12), les éléments de verrouillage (12) étant des pinces configurées pour se verrouiller dans un évidement correspondant pour fixer l'insert (3) dans le bâti (20) lorsque l'insert (3) est inséré dans le bâti (20).

13. Bâti selon l'une quelconque des revendications précédentes, chaque insert comprenant une ouverture (25) s'étendant sur plus de 60° de la circonférence de l'insert (3) et sur au moins 60% de la hauteur de l'insert (3).

14. Bâti selon l'une quelconque des revendications précédentes, les éléments de préhension (1 ; ; 1" ; 2 ; 2' ; 2") étant configurés pour centrer une cuve (10) dans le support de cuve au niveau d'au moins deux positions axiales de la cuve.

15. Appareil de traitement d'échantillon automatisé comprenant :
le bâti (20) comprenant un ou plusieurs inserts (3) selon l'une quelconque des revendications précédentes, et un ou plusieurs outils configurés pour venir automatiquement en prise avec des cuves (10) agencées dans les inserts (3).
